# EUROPÄISCHE PATENTANMELDUNG

(11) **EP 1 172 203 A1**
(43) Veröffentlichungstag der Anmeldung: **16.01.2002**
(21) Anmeldenummer: 01115668.4
(22) Anmeldetag: 04.07.2001
(51) Int. Cl.: B32B 27/40, B32B 27/30, B29D 9/00, A47K 3/02

(54) **Schlagzähes Sandwich-Strukturelement**

(30) Priorität: 10.07.2000 DE 10033260
(71) Anmelder: BAYER AG, 51368 Leverkusen (DE)
(72) Erfinder: Henrichs, Paul, 51469 Bergisch Gladbach (DE); Hausmann, Heinz, Dr., 42799 Leichlingen (DE)

(57) **Zusammenfassung**

Gegenstand der Erfindung sind schlagzähe Sandwich-Strukturelemente, die mindestens eine massive duroplastische Polyurethanschicht und mindestens eine Polyurethan-Elastomerschicht enthalten, Verfahren zu ihrer Herstellung und der Einsatz derartiger Sandwich-Strukturelemente in Sanitärartikeln, Schwimmbecken, Kühlmöbeln, Wandelementen, Fahrzeugen oder Möbeln, in der Bauindustrie, der Abwassertechnik oder im Karosseriebau.

## Beschreibung

Gegenstand der Erfindung sind schlagzähe Sandwich-Strukturelemente, die mindestens eine massive duroplastische Polyurethanschicht und mindestens eine Polyurethan-Elastomerschicht enthalten, Verfahren zu ihrer Herstellung und der Einsatz derartiger Sandwich-Strukturelemente in Sanitärartikeln, Schwimmbecken, Kühlmöbeln, Wandelementen, Fahrzeugen oder Möbeln, in der Bauindustrie, der Abwassertechnik oder im Karosseriebau.

EP-A 589 343 offenbart, Sanitärartikel, deren Sicht- und Gebrauchsoberfläche aus Polymethylmethacrylat besteht, mit einer tragenden Polyurethan-Sandwich-Struktur zu versehen, wobei der Auftrag der Schichten mittels einer Zweistoff-Mischdüse direkt auf das vorgeformte Polymethylmethacrylat-Substrat schichtweise erfolgt. Zur Verbesserung der Haftung wird die zu beschichtende Fläche aus Polymethylmethacrylat zunächst mit einer Lösung eines unvernetzten elastischen Polymerharzes von starker Kristallisationsneigung beschichtet. Dabei kann es sich auch um eine Polyurethanlösung handeln.

Aus WO 94/14587 gehen Sandwich-Strukturelemente aus zwei massiven Reaktivkunststoffschichten und einer dazwischen liegenden Reaktivkunststoff-Schaumschicht hervor. Die Sandwich-Strukturelemente werden aus Zweikomponenten-Reaktionskunststoffen durch schichtweisen Sprühauftrag entsprechender Reaktivmischungen auf ein Substrat erzeugt. Als Reaktivkunststoff werden thermisch härtbare Harze eingesetzt; vorgeschlagen werden Polyharnstoffe oder Mischungen aus Polyurethanen und Polyestern.

Aus EP-A 728 574 sind Sandwich-Strukturelemente aus massiven, 15 bis 55 Gew.-% Glimmer oder Talkum enthaltenden Polyurethanschichten und Polyurethanschaumschichten bekannt, die durch schichtweisen Auftrag auf ein Substrat erhalten werden.

Es zeigt sich in der praktischen Anwendung, dass die Sandwich-Strukturelemente des Standes der Technik eine noch unbefriedigende Schlagzähigkeit aufweisen, was sich insbesondere bei Elementen geringer Dicke bemerkbar macht. So kann es beispielsweise bei Sanitärartikeln zum Bruch der Wandung und damit erhöhter Verletzungsgefahr kommen.

Es wurde nun gefunden, dass sich durch Kombination einer massiven duroplastischen Polyurethanschicht mit einer darunter liegenden Schicht aus einem vernetzten Polyurethan-Elastomer Sandwich-Strukturelemente mit deutlich verbesserter Schlagzähigkeit erhalten lassen.

Gegenstand der Erfindung sind daher Sandwich-Strukturelemente, die die folgende Schichtenabfolge aufweisen:
1. gegebenenfalls eine dekorative Oberflächenschicht, insbesondere eine harte Oberflächenschicht (z.B. PMMA, Furnier, Lack, Gel-coat, ABS, Polycarbonat, Polystyrol, PVC, ASA),
2. eine massive duroplastische Polyurethanschicht,
3. eine Polyurethan-Elastomerschicht,
4. gegebenenfalls eine Polyurethanschaumschicht,
5. eine weitere massive duroplastische Polyurethanschicht,
6. gegebenenfalls ein Substrat [z.B. aus Papier, Kunststoff (z.B. GFK, Folien), Stein, Holz oder Metall (z.B. Stahl)] oder eine weitere dekorative Oberflächenschicht.

Weitere bevorzugte Schichtabfolgen sind Dekorative Schicht / massive duroplastische PU-Schicht / PU-Elastomerschicht / PU-Schaumschicht oder Dekorative Schicht / massive duroplastische PU-Schicht / PU-Elastomerschicht / PU-Schaumschicht / massive duroplastische PU-Schicht / (optional Dekorative Schicht) oder Dekorative Schicht / massive duroplastische PU-Schicht / PU-Elastomerschicht / massive duroplastische PU-Schicht.

Erfindungsgemäß als Polyurethan-Reaktivmischung zur Herstellung der Polyurethanschichten geeignet sind alle schnell reagierenden Polyurethan-Reaktivmischungen, wie sie insbesondere für die Reaction-Injection-Molding-Technik (RIM-Technik) entwickelt wurden. Bevorzugt wird als Isocyanat-Komponente ein Semiprepolymer auf Basis MDI und Polyetherpolyolen mit einer OH-Zahl von 40 bis 600, besonders bevorzugt 150 bis 400 mit 10 bis 33 Gew.-%, besonders bevorzugt 20 bis 28 Gew.-% NCO-Gruppen eingesetzt.

Als Isocyanatkomponente eignen sich jedoch auch aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten, z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-AS 1 202 785, US-PS 3 401 190), 2,4-und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenylmethan-diisocyanat, 1,3- und 1,4-Phenylendiisocyanat (DE-OS 196 27 907), 1,4-Duroldiisocyanat (DDI), 4,4'-Stilbendiisocyanat (DE-OS 196 28 145), 3,3'-Dimethyl-4,4'-biphenylendiisocyanat (TODI, DE-OS 195 09 819) 2,4- und 2,6-Toluylendiisocyanat (TDI) sowie beliebige Gemische dieser Isomeren, Diphenylmethan-2,4'-und/oder -4,4'-diisocyanat (MDI), Isophorondiisocyanat (IPDI) oder Naphthylen-1,5-diisocyanat (NDI) geeignet.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-PS 874 430 und GB-PS 848 671 beschrieben werden, m- und p-Isocyanatophenylsulfonylisocyanate gemäß US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 25 04 400, 25 37 685 und 25 52 350 beschrieben werden, Norbornan-diisocyanate gemäß US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in DE-PS 10 22 789, 12 22 067 und 1 027 394 sowie in DE-OS 1 929 034 und 2 004 048 beschrieben werden, Urethangruppen aufweisende Polyisocyanate, wie sie z.B. in der BE-PS 752 261 oder in US-PS 3 394 164 und 3 644 457 beschrieben werden, acylierte Harnstoffgruppen aufweisende Polyisocyanate gemäß DE-PS 1 230 778, Biuretgruppen aufweisende Polyisocyanate, wie sie in US-PS 3 124 605, 3 201 372 und 3 124 605 sowie in GB-PS 889 050 beschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 474 und 1 072 956, in US-PSt 3 567 763 und in DE-PS 12 31 688 genannt werden, Umsetzungsprodukte der obengenannten Isocyanate mit Acetalen gemäß DE-PS 1 072 385 und polymere Fettsäureester enthaltende Polyisocyanate gemäß US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt, werden ("rohes MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Als Treibmittel geeignet sind Wasser als Kohlendioxid erzeugendes chemisches Treibmittel oder die in der Polyurethanchemie üblichen niedrig siedenden Flüssigkeiten als physikalische Treibmittel. Ferner geeignet sind unter Druck in mindestens einer der Komponenten lösliche Gase, z.B. Kohlendioxid, die beim Entspannen während des Austritts aus dem Mischaggregat unter Aufschäumen freigesetzt werden. Ferner ist die Mitverwendung weiterer Füllstoffe wie Glasfasern, Metallteilchen oder Farbpigmente oder zur Erhöhung der Feuerbeständigkeit eingesetzte Füllstoffe wie Melaminharze oder Phosphorverbindungen nicht ausgeschlossen.

Die Komponenten der Polyurethan-Reaktivmischung werden vorzugsweise in einem solchen Verhältnis miteinander vermischt, dass die Isocyanat-Kennzahl der Mischung 90 bis 130 beträgt.

Bevorzugt werden Systeme eingesetzt, die innerhalb von 1 bis 5 Minuten, vorzugsweise innerhalb 1 bis 3 Minuten nach der Mischung Klebfreiheit erreichen.

Den Polyurethan-Reaktivmischungen können dem Fachmann geläufige Katalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethylpiperazin, Bis-(dimethylaminoalkyl)-piperazine (DE-OS 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-OS 17 20 633), Bis-(dialkylamino)-alkylether (US-PS 3 330 782, DE-AS 10 30 558, DE-OS 18 04 361 und 26 18 280) sowie Amidgruppen (vorzugsweise Formamidgruppen) aufweisende tertiäre Amine gemäß DE-OS 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine gemäß DE-OS 27 32 292. Als Katalysatoren können ferner Silaamine mit Kohlenstoff-Silizium-Bindungen, wie sie in US-PS 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 17 69 043). Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in DE-OS 20 62 286, 2062 289, 2117 576, 2129 198, 2330 175 und 2330 211 beschrieben. Erfindungsgemäß können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn-mercaptid (US-PS 3 645 927) vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Weiterhin können Metallorganische Verbindungen des Zinks, Bismuts, Eisens oder anderer Übergangsmetalle Verwendung finden.

Selbstverständlich können alle obengenannten Katalysatoren als Gemische eingesetzt werden. Von besonderem Interesse sind dabei Kombinationen aus organischen Metallverbindungen und Amidinen, Amino-pyridinen oder Hydrazinopyridinen (DE-OS 24 34 185, 26 01 082 und 26 03 834).

Weitere Vertreter von erfindungsgemäß zu verwendenden Katalysatoren sowie Einzelheiten über die Wirkungsweise der Katalysatoren sind in R. Vieweg, A. Höchtlen (Hrsg.): "Kunststoff-Handbuch", Band VII, Carl-Hanser-Verlag, München 1966, S.96-102 beschrieben.

Die Katalysatoren bzw. Katalysatorkombinationen werden in der Regel in einer Menge zwischen etwa 0,001 und 10 Gew.-%, insbesondere 0,01 bis 1 Gew.-% bezogen auf die Gesamtmenge an Verbindungen mit mindestens zwei gegenüber Isocyanaten reaktionsfähigen Wasserstoffatomen eingesetzt.

Der Reaktionsmischung können gegebenfalls Zusatzstoffe einverleibt werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen, Viskositätsmodifikatoren, Thixotropiermittel (z.B. chemische Thixotropiermittel wie DETDA), Wasserbinder wie Zeolithe oder Carbodiimide, Entschäumer (De-Foamer sowie Anti-Foamer), Spreitmittel, Hydrophobiermittel und Pigmente. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden, ebenso Alkylarylpolyglykolether und -acetate. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 25 58 523. Geeignet sind auch andere Organospolysiloxane, oxyethylierte Alkylphenole, oxyethylierte Fettalkohole, Paraffinöle, Ricinusöl- bzw. Ricinolsäureester, Türkischrotöl und Erdnussöl und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen b) angewandt. Zugesetzt werden können auch Reaktionsverzögerer z.B. sauer reagierende Stoffe wie Salzsäure, oder organische Säuren und Säurehalogenide, ferner an sich bekannte Zellregler wie Paraffine oder Fettalkohole oder Dimethylpolysiloxane sowie Pigmente oder Farbstoffe und an sich bekannte Flammschutzmittel, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungizid oder fungistatisch, baterizid oder bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Die massiven duroplastischen Polyurethanschichten werden hergestellt aus einer Zweikomponenten-Polyurethanformulierung; bevorzugt wird ein Polyurethan eingesetzt, das durch Umsetzung einer Isocyanatkomponente, die besonders bevorzugt ein Semiprepolymer auf Basis MDI und Polyetherpolyolen mit einer OH-Zahl von 40 bis 600, insbesondere 150 bis 400 mit 10 bis 33 Gew.-%, insbesondere 20 bis 28 Gew.-% NCO-Gruppen ist, mit höherfunktionellen Polyetherpolyolen erhalten wird. Hierbei handelt es sich bevorzugt um Polyether, die durch Alkoxylierung von Diaminen wie Ethylendiamin oder o-Toluylendiamin oder Zuckeralkoholen wie Sorbit hergestellt werden. Es können aber auch durch Alkoxylierung von Ethylenglykol, Diethylenglykol, Glycerin oder Trimethylolpropan erhaltene Polyetherpolyole mitverwendet werden. Als Polyolkomponente wird vorzugsweise ein Polyetherpolyol mit einer OH-Zahl von 150 bis 400 eingesetzt. Die massiven duroplastischen Polyurethanschichten können eine Dicke von 0,8 bis 3 mm, vorzugsweise 1,5 bis 3 mm, besonders bevorzugt 2 bis 3 mm aufweisen.

In einer besonders bevorzugten Ausführungsform enthält die massive duroplastische Polyurethanschicht 10 bis 55 Gew.-%, vorzugsweise 25 bis 50 Gew.-%, insbesondere 30 bis 40 Gew.-% Glimmer oder Talkum als Füllstoff. Die mittlere Teilchengröße des Glimmers bzw. Talkums kann zwischen 5 und 80 µm liegen.

Die Polyurethan-Elastomerschicht besteht aus vernetzten, kompakten oder zelligen PUR-Elastomeren. Die Herstellung von kompakten oder zelligen, z.B. mikrozellularen, PUR-Elastomeren ist seit langem aus zahlreichen Patent- und Literaturveröffentlichungen bekannt. Eine Übersicht über PUR-Elastomere, ihre Eigenschaften und Anwendungen wird z. B. in G.W. Becker, D. Braun (Hrsg.): "Kunststoff-Handbuch", Band 7, 3. Auflage, Carl-Hanser-Verlag, München, Wien 1993, S. 417-513 gegeben.

Als Isocyanatkomponente werden bevorzugt MDI oder TDI eingesetzt. Besonders bevorzugt werden die PUR-Elastomere nach dem Prepolymer-Verfahren hergestellt, wobei zweckmäßigerweise im ersten Schritt aus einer höhermolekularen Polyhydroxylverbindung und mindestens einem Di- oder Polyisocyanat ein Isocyanatgruppen aufweisendes Polyadditionsaddukt, das bevorzugt einen NCO-Gehalt von 10 bis 30 Gew.-%, insbesondere 10 bis 20 Gew.-%. aufweist, hergestellt wird. Bevorzugt wird zur Herstellung der Elastomerschicht die gleiche Isocyanatkomponente eingesetzt wie zur Herstellung der massiven duroplastischen Polyurethanschicht(en). Im zweiten Schritt können massive PUR-Elastomere aus derartigen Isocyanatgruppen aufweisenden Prepolymeren durch Umsetzung mit niedermolekularen Kettenverlängerungsmitteln und/oder Vernetzungsmitteln und/oder höhermolekularen Polyhydroxylverbindungen sowie Kettenreglern hergestellt werden.

Als höhermolekulare Polyhydroxylverbindungen b) eignen sich solche mit mindestens zwei gegen Isocyanatgruppen reaktiven H-Atomen; vorzugsweise werden Polyesterpolyole und Polyetherpolyole eingesetzt. Solche Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 reaktive Wasserstoffatome gebunden enthält oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermolekül kommen Wasser oder 2- und 8-wertige Alkohole in Betracht, wie Ethylenglykol, Propandiol-1,2 und -1,3, Diethylenglykol, Dipropylenglykol, Ethandiol-1,4, Glycerin, Trimethylotpropan usw. Die Polyetherpolyole, vorzugsweise Polyoxypropylen-polyoxyethylen-polyole, besitzen eine (mittlere) Funktionalität von 2 bis 8, bevorzugt 2 bis 4, besonders bevorzugt 2,5 bis 3,5 und zahlenmittlere Molekulargewichte von 500 bis 8000, vorzugsweise 800 bis 3500.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 Kohlenstoffatomen hergestellt werden. Als Dicarbonsäuren kommen beispielsweise in Betracht: Bernsteinsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäure-mono und/oder -diester von Alkoholen mit 1 bis 4 Kohlenstoffatomen oder Dicarbonsäureanhydride eingesetzt werden. Vorzugsweise verwendet werden Dicarbonsäuregernische aus Bernstein-, Glutar- und Adipinsäure in Mengenverhältnissen von beispielsweise 20 bis 35 / 35 bis 50 / 20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Propandiol-1,3, 1,4-Butandiol, 1,5-Pentandiol, 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,5-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. o-Hydroxycapronsäure und Hydroxyessigsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Insertgasen, wie z.B. Stickstoff, Kohlenmonoxid, Helium, Argon und auch in der Schmelze bei Temperaturen von 150 bis 300°C, vorzugsweise 180 bis 230°C gegebenenfalls unter vermindertem Druck bis zu der gewünschten Säurezahl, die vorteilhafterweise kleiner als 10, vorzugsweise kleiner als 1 ist, polykondensiert werden.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 10 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Konden-sationswassers durchgeführt werden.

Zur Herstellung der Polyesterpolyole werden die organischen Polycarbonsäuren und/oder deren Derivate mit mehrwertigen Alkoholen vorteilhafterweise im Molverhältnis von 1 : 1 bis 1,8, vorzugsweise 1 : 1,05 bis 1,2 polykondensiert. Die erhaltenen Polyesterpolyole besitzen vorzugsweise eine Funktionalität von 2 bis 3, insbesondere 2 bis 2,6 und ein zahlenmittleres Molekulargewicht von 400 bis 6 000, vorzugsweise 800 bis 3500.

Als geeignete Polyesterpolyole sind ferner Hydroxylgruppen aufweisende Polycarbonate zu nennen. Als Hydroxylgruppen aufweisende Polycarbonate kommen solche der an sich bekannten Art in Betracht, die beispielsweise durch Umsetzung von Diolen, wie 1,2-Propandiol, 1,4-Butandiol, 1,6-Hexandiol, Diethylenglykol, Trioxyethylenglykol und/oder Tetraoxyethylenglykol mit Diarylcarbonaten, z. B. Diphenylcarbonat oder Phosgen hergestellt werden können.

Zur Herstellung der Polyurethan-Elastomeren werden zusätzlich zu den höhermolekularen Polyhydroxylverbindungen als niedermolekulare difunktionelle Kettenverlängerungsmittel, niedermolekulare, vorzugsweise tri- oder tetrafunktionelle Vernetzungsmittel oder Mischungen aus Kettenverlängerungs- und Vernetzungsmitteln verwendet werden.

Derartige Kettenverlängerungs- und Vernetzungsmittel werden eingesetzt zur Modifizierung der mechanischen Eigenschaften, insbesondere der Härte der PUR-Elastomeren. Geeignete Kettenverlängerungsmittel wie Alkandiole, Dialkylenglykole und Polyalkylen-polyole und Vernetzungsmittel, z.B. 3- oder 4-wertige Alkohole und oligomere Polyalkylen-polyole mit einer Funktionalität von 3 bis 4, besitzen üblicherweise Molekulargewichte < 800, vorzugsweise von 18 bis 400 und insbesondere von 60 bis 300. Als Kettenverlängerungsmittel vorzugsweise verwendet werden Alkandiole mit 2 bis 12, vorzugsweise 1, 4 oder 6 Kohlenstoffatomen, z B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z.B. 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.-butyl-, N,N'-Dicyclohexyl-4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin.

Bevorzugt werden als Polyolkomponente höherfunktionelle Polyether, beispielsweise auf Basis von Glycerin oder Trimethylolpropan, Pentaerythrit, Zucker, Ethylendiamin oder o-Toluylendiamin in Verbindung mit niedermolekularen Kettenverlängerern wie Ethandiol oder Butandiol, sowie Kettenreglern wie monofunktionellen Alkoholen eingesetzt. Es können auch bifunktionelle Polyether auf Basis von Ethylenglykol, Propylenglykol oder Diethylenglykol sowie Polyester in Verbindung mit höherfunktionellen Vernetzern wie Glycerin, Trimethylolpropan, Hexamethylendiamin oder Isophorondiamin verwendet werden. Werden im zweiten Schritt Wasser oder Mischungen aus Wasser und gegebenfalls niedermolekularen Kettenverlängerungsmitteln und/oder Vernetzungsmitteln und/oder höhermolekularen Polyhydroxylverbindungen eingesetzt, können so mikrozellulare PUR-Elastomere hergestellt werden. Alternativ kann dies auch durch den Einsatz von physikalischen Treibmitteln erreicht werden.

Die Dicke der Polyurethan-Elastomerschichten beträgt in der Regel 0,5 bis 4 mm, vorzugsweise 1,0 bis 3 mm, besonders bevorzugt 1,5 bis 2,5 mm.

Die erfindungsgemäßen Sandwich-Strukturelemente können auch ein oder mehrere Polyurethanschaumschichten enthalten. Zur Herstellung der Schaumschicht werden bevorzugt dieselben Isocyanat- und Polyolkomponenten eingesetzt wie zur Herstellung der massiven duroplastischen Polyurethanschicht(en). Die Schaumschicht soll vorzugsweise eine Dicke von 0,5 bis 30 mm aufweisen, insbesondere bevorzugt sind Schaumschichtdicken zwischen 2 und 20mm. Bevorzugt sind geschlossenporige Schäume.

Erfindungsgemäß ist es nicht erforderlich, dass auch die Schaumschicht Glimmer oder Talkum enthält. Die Schaumschicht kann z.B. andere Füllstoffe als Glimmer oder Talkum, z.B. Melaminharze oder gemahlene Polyurethanabfälle, enthalten oder auch Füllstoff-frei ausgebildet sein. Bevorzugt ist jedoch, dass auch die Schaumschicht Glimmer oder Talkum als Füllstoff enthält.

Die dekorative Oberflächenschicht kann je nach gewünschten Eigenschaften aus unterschiedlichen Materialien ausgeführt werden. Beispiele sind Kunststoffe wie PMMA, ABS, PVC, Polycarbonat oder ASA, es können aber auch Metalle wie Aluminium oder Stahl oder auch Holz (z.B. Furniere) zur Anwendung kommen. Die dekorative Oberflächenschicht kann die vordere wie auch die rückseitige Sichtfläche oder auch beide Sichtflächen der erfindungsgemäßen Sandwich-Strukturen bilden.

Die erfindungsgemäßen Sandwich-Strukturelemente sind gegebenenfalls mit einem Substrat fest verbunden. Dabei kann es sich z.B. um ein Substrat aus Papier, Kunststoff (z.B. GFK, ASA, ABS, PVC, PP, PE, Teflon, Acryl- oder Epoxidharz, massiv oder in Form einer Folie), Stein, Holz oder Metall (z.B. Stahl) handeln.

Das Substrat, auf dem die Sandwich-Struktur erzeugt wird, kann eine nach Aushärten der Sandwich-Struktur zu entfernende Form sein, die vor dem Schichtauftrag mit einem Trennmittel versehen ist. Als Substrate sind ferner Kunststoff- oder Metallteile, z.B. aus dem Automobilbereich geeignet.

Vorzugsweise handelt es sich bei dem Substrat um einen Teil des Endproduktes, mit dem das Sandwich-Strukturelement einen Verbundkörper bildet. In einer Ausführungsform der Erfindung handelt es sich bei dem Substrat um ein Formteil aus PMMA, das die Sicht- und Gebrauchsfläche eines Sanitärartikels bildet. Es wurde gefunden, dass die erfindungsgemäßen Sandwich-Strukturelemente eine hervorragende Haftung zu PMMA-Formteilen aufweisen, wenn diese als Substrat für die schichtweise Erzeugung der Strukturelemente eingesetzt werden. Für die Erzeugung der hervorragenden Haftung ist es ausreichend, die zu beschichtende PMMA-Oberfläche mit einem mit Solvens (z.B. Ethanol, Aceton, Essigsäureethylester, Methanol, Isopropanol, Toluol oder Xylol) getränktem Lappen zu reinigen, damit diese fett- und staubfrei sind.

Die erfindungsgemäßen Sandwich-Strukturen können aus einer beliebigen Anzahl von Schichten bestehen. Bevorzugt ist eine ungerade Zahl von Schichten, wobei die jeweils äußersten Schichten Massivschichten sind. Besonders bevorzugt ist eine Anzahl von 3 bis 5 Schichten.

Die erfindungsgemäßen Sandwich-Strukturen sind nicht auf solche mit gleichmäßiger Dicke der einzelnen Schichten beschränkt. Vielmehr können die Schichten je nach Anforderungen unterschiedlich dick ausgebildet werden; auch kann jede einzelne Schicht in ihrer Dicke variieren. Ferner ist es nicht erforderlich, dass sich eine Schicht kontinuierlich durch das Strukturelement erstreckt. Z.B. ist es möglich, das Aufsprühen der Reaktivmischung so zu steuern, dass sich in dem Strukturelement Schauminseln bilden, die durch Massiv-Stege, die die Massivschichten miteinander verbinden, durchdrungen sind.

Die Erfindung ist nicht auf Sandwich-Strukturen beschränkt, bei denen sich die jeweiligen Schichten über die gesamte Fläche der Struktur erstrecken. Vielmehr kann es vorteilhaft sein, die Schaumschicht durchdringende Massiv-Polyurethanstege vorzusehen, die der Struktur eine besonders gute Scherstabilität verleihen. Ferner kann es zweckmäßig sein, die Schaumschicht mit unterschiedlichen Schaumdichtebereichen zu versehen, z.B. in dem die Treibmitteldosierung einstellbar veränderbar ausgeführt wird.

Ferner ist es erfindungsgemäß möglich, zwischen verschiedenen Lagen und/oder Schichten der Sandwich-Struktur Verstärkungselemente und/oder Verankerungselemente einzulegen. Z.B. können für Verstärkungszwecke Strands oder Gewebe aus Glasfasern, Carbonfasern, Aramidfasern, Mineralfasern, Kunstfasern organischer Art oder Naturfasern auf eine noch nicht ausreagierte Lage aufgelegt und diese durch den nachfolgenden Auftrag einer weiteren Lage in das Sandwich-Element eingeschlossen werden.

Gegenstand der Erfindung ist auch ein Verfahren zur Herstellung der erfindungsgemäßen Sandwich-Strukturelemente. Dabei werden die massiven duroplastischen Schichten, die Elastomerschichten und die Schaumschichten durch aufeinanderfolgendes Auftragen einer Polyurethanreaktivmischung auf ein geeignetes Substrat erzeugt werden. Bevorzugt enthält die hierzu verwendete Polyurethanreaktivmischung feinteiligen Glimmer oder Talkum in einer Menge von 10 bis 55 Gew.-%, bezogen auf die Mischung.

Die Erzeugung der erfindungsgemäßen Sandwich-Strukturen erfolgt bevorzugt durch schichtweisen Auftrag auf ein Substrat, beispielsweise durch Gießen, Rakeln oder Sprühen, vorzugsweise durch Sprühen. Dabei werden die Komponenten der Polyurethanreaktivmischung, insbesondere Isocyanat, füllstoffhaltiges Polyolgemisch, gegebenenfalls getrennt das Treibmittel, mittels getrennter Leitungen einem geeigneten Mischaggregat dosiert zugeführt, wobei der Auslass des Mischaggregates als Sprühkopf ausgebildet ist. Als Mischaggregat sind sowohl nach der Gegenstrom-Injektionsmethode arbeitende Hochdruckmischaggregate als auch Niederdruck-Rührwerksmischaggregate geeignet; siehe z.B. G.W. Becker, D. Braun (Hrsg.): "Kunststoff-Handbuch", Band 7, 3. Auflage, Carl-Hanser-Verlag, München, Wien 1993, Seiten 174 bis 186. Gegebenenfalls kann am Mischkopfauslass eine zusätzliche Sprühvorrichtung vorgesehen sein, z.B. in Form einer den Auslass des Mischaggregates konzentrisch umgebenden Druckluftdüse. Die mittels der Sprühvorrichtung erzeugten Tröpfchen weisen vorzugsweise einen Durchmesser von 0,2 bis 2 mm, insbesondere bevorzugt 0,5 bis 1,5 mm auf.

Jede der Duroplast-, Elastomer- oder Schaumschichten kann dabei vorteilhaft durch Aufsprühen der Reaktivmischung in mehreren Lagen erzeugt werden, so dass, insbesondere wenn dickere Schichten erforderlich sind, ein Ablaufen der jeweils noch flüssigen, noch nicht ausreagierten Lage von gegen die Horizontale geneigten Auftragsflächen vermieden wird. Dabei erfolgt der Auftrag der aufeinanderfolgenden Lagen jeweils "nass in nass", d.h. in einem noch nicht vollständig ausreagierten Zustand der vorher aufgetragenen Lage, insbesondere vor Eintritt der Klebfreiheit der jeweils vorigen Lage. Um ein Ablaufen der noch nicht ausreagierten Lagen zu unterbinden, können den Reaktionsmischungen Thixotropiermittel zugesetzt werden, beispielsweise aromatische oder aliphatische Amine wie DETDA.

Auch der Auftrag der ersten Lage einer Schaumschicht auf die letzte Lage der darunter liegenden Schicht erfolgt vorzugsweise "nass in nass", d.h. bevor Klebfreiheit der Massivschicht eingetreten ist. Der Sprühauftrag der ersten Lage einer Duroplast- oder Elastomerschicht auf die letzte Lage einer Schaumschicht kann ohne Nachteil erfolgen, wenn die Schaumschicht bereits ausreagiert ist, bzw. Klebfreiheit eingetreten ist.

Der Auftrag der Schichten der Sandwich-Struktur kann durch einen oder mehrere Mischaggregate erfolgen. Bei einer aus im wesentlichen identischen Material bestehenden Sandwich-Struktur kann es vorteilhaft sein, mindestens einen Mischkopf vorzusehen, bei dem die zuzuführenden Komponenten der Reaktivmischung während' des Auftrags derart veränderbar sind, dass aus diesem Mischkopf alternierend Massiv-Polyurethanduroplast, Polyurethanelastomer und Polyurethanschaum erzeugt werden können.

Ferner können die erfindungsgemäßen Sandwich-Strukturen in Form von eindimensional endlosen Flächenelementen hergestellt werden, indem der Auftrag der Schichten auf ein bewegtes Transportband erfolgt, gegebenenfalls auf eine auf dem Transportband bewegte Unterlage, auf der die Beschichtung haftet. Geeignete Unterlagen sind strukturierte oder unstrukturierte Folien aus Papier, Kunststoff oder Aluminium oder auch Stahlbleche, Furnier oder Holzplatten. Aus solchen endlosen Sandwich-Strukturelemente werden Konstruktionselemente durch Sägen oder Schneiden hergestellt.

In einer bevorzugten Ausführungsform werden zumindest eine erste massive duroplastische Polyurethanschicht und eine erste Polyurethan-Elastomerschicht durch aufeinanderfolgenden Auftrag der Reaktivmasse auf ein unteres Transportband hergestellt und es wird zumindest eine weitere massive duroplastische Polyurethanschicht auf der Oberseite des oberen Transportbandes erzeugt und durch Umlenken des Transportbandes vor dem Aushärten mit der noch im Steigen begriffenen Schaumschicht auf dem unteren Transportband in Kontakt gebracht.

Erfindungsgemäß ist es ferner nicht erforderlich, alle Schichten des Sandwich-Strukturelementes durch aufeinanderfolgende Beschichtungen zu erzeugen. Vielmehr ist es möglich, z.B. wenn auf eine besondere Oberflächenstruktur beide Seiten des Strukturelementes Wert gelegt wird, die obere, z.B. massive duroplastische Schicht des Sandwich-Strukturelementes auf einem getrennten Substrat getrennt zu erzeugen und diese vor Eintreten der Klebfreiheit auf die oberste Schicht eines getrennt erzeugten Sandwich-Strukturelementes aufzubringen, bevor diese oberste Schicht Klebfreiheit erlangt hat.

Gegenstand der Erfindung ist weiterhin der Einsatz der erfindungsgemäßen Sandwich-Strukturelemente in Sanitärartikeln, Fahrzeugen, Möbeln, und in der Bauindustrie. Die erfindungsgemäßen Sandwich-Strukturelemente zeichnen sich in all diesen Anwendungen aus durch eine hohe Schlagzähigkeit auch bei niedriger Dicke des Elements.

Mit den erfindungsgemäßen Sandwich-Strukturelemente lassen sich beispielsweise verstärkte Sanitärartikel herstellen, deren Sichtflächen aus Acrylharz oder Polymethylmethacrylat bestehen, beispielsweise Bade- oder Duschwannen. Dabei hat sich folgender Aufbau bewährt: im Bodenbereich der Wanne wird auf die der Sichtfläche abgewandten Seite des aus PMMA bestehenden Rohlings (S1) eine massive duroplastische Polyurethan-Schicht (S2) (z.B. Baytec® RS massiv, Bayer AG, D-51368 Leverkusen) aufgetragen, auf diese eine Polyurethan-Elastomerschicht (S3) (z.B. Baytec® Reaktiv, Bayer AG, D-51368 Leverkusen), anschließend eine Schicht aus Polyurethanschaum (S4) (z.B. Baytec® RS Schaum, Bayer AG, D-51368 Leverkusen) und abschließend wieder eine massive duroplastische Polyurethan-Schicht (S5). Typische Parameter der Schichten sind beispielsweise:
S1: Wanddicke 0,8-2,5 mm
S2: Schichtdicke ca. 3 mm, Rohdichte ca. 1,3 g/cm³,
S3: Schichtdicke ca. 2 bis 3 mm, Rohdichte ca. 1,0 g/cm³,
S4: Schichtdicke ca. 13 mm, Rohdichte ca. 0,4 g/cm³,
S5: Schichtdicke ca. 3 mm, Rohdichte ca. 1,3 g/cm³,

In dem Bereich der Rundungen, in dem der Boden der Wanne in die Seitenflächen übergeht, wird die Dicke der Schaumschicht sukzessive auf ca. 6 mm reduziert, im Seitenwandbereich werden lediglich die Schichten S2 und S3 aufgebracht. In einer weniger bevorzugten Ausführungsform kann im Bodenbereich der Wanne auf die Schicht S3 verzichtet werden. Die erfindungsgemäßen Sanitärartikel weisen eine deutlich erhöhte Schlagzähigkeit auf und gewährleisten dem Benutzer dadurch erhöhte Sicherheit und geringere Verletzungsgefahr.

Eine weitere Anwendung finden die erfindungsgemäßen Sandwich-Strukturelemente in der Herstellung von Aufbauten für Kühlfahrzeuge. Diese Aufbauten können aus plattenförmigen Elementen hergestellt werden, die sich im Sprühverfahren in flächigen Formen herstellen lassen. Hierzu wird in die Form zunächst eine Gel-coat-Schicht (S1) (z.B. basierend auf ungesättigten Polyesterharzen oder Polyurethan) eingebracht, deren Dicke beispielsweise 0,8 mm betragen kann. Diese Schicht stellt später eine Sichtfläche des Elements dar. Auf diese Schicht wird eine massive, duroplastische Polyurethanschicht (S2) aufgesprüht, die beispielsweise eine Dicke von ca. 3 mm aufweisen kann. Anschließend wird eine Polyurethan-Elastomerschicht (S3) aufgesprüht, in einer Dicke von beispielsweise ca. 2 mm. Es schließt sich eine weitere massive, duroplastische Polyurethanschicht (S4) an, die z.B. eine Dicke von ca. 2 mm aufweisen kann. Das plattenförmige Konstruktionselement für die Herstellung der Aufbauten für Kühlfahrzeuge wird erhalten, indem zwei der so erhaltenen Paneele kombiniert und der Zwischenraum zwischen ihnen mit einem Polyurethan-Hartschaum (S5) in einer Schichtdicke von in der Regel 1 bis 8 cm, beispielsweise 5 bis 7 cm, der eine Rohdichte im Bereich von ca. 30 bis 70 kg/m³ aufweist, ausgeschäumt wird. Es ergibt sich so ein Konstruktionselement mit der Schichtfolge S1/S2/S3/S4/S5/S4/S3/S2/S1. Die erfindungsgemäßen Konstruktionselemente zeigen gute Wärmedämmung und hervorragende Schlagzähigkeit, so dass Beschädigungen der Innenwand des Aufbaus beim Beladen oder durch Verrutschen der Ladung während des Transports weitgehend vermieden werden können. Weitere Vorteile der erfindungsgemäßen Konstruktionselemente sind, dass die zur Herstellung benötigte Zeitdauer kurz ist und dass die Elemente aus einem einheitlichen Werkstoff, nämlich Polyurethan, bestehen, und daher nach Gebrauch als Ganzes entsorgt oder der Wiederverwendung zugeführt werden können.

Analog aufgebaute Elemente können auch als Dämmplatten oder Konstruktionselemente im Hausbau, insbesondere für den Fertighausbau, eingesetzt werden.

Auch im Baubereich können die erfindungsgemäßen Sandwich-Strukturelemente eingesetzt werden, beispielsweise zur Herstellung von Türen, Garagentoren usw. Geeignet hierfür sind beispielsweise plattenförmige Elemente der Schichtfolge (S1) Dekorschicht (z.B. Furnier oder Gel-coat auf Basis eines ungesättigten Polyesterharzes oder eines Polyurethans), (S2) massive duroplastische Polyurethanschicht (Dicke z.B. ca. 3mm), (S3) Polyurethan-Elastomerschicht (Dicke z.B. ca. 2mm), (S4) massive duroplastische Polyurethanschicht (Dicke z.B. ca. 2 mm) und gegebenenfalls (S5) eine weitere Dekorschicht. Die Elemente können im Sprühverfahren in flächigen Formen hergestellt werden. Auch bei diesen Elementen ist die erhöhte Schlagzähigkeit von entscheidender Bedeutung.

Weitere Anwendungsbereiche der erfindungsgemäßen Sandwich-Strukturelemente ist die Herstellung schlagzäh beschichteter Fahrzeugteile (z.B. Automobilteile, Bootsteile bzw. Bootskörper, insbesondere für Ruderboote, Kanus, Kajaks), schlagzäher Möbel oder schlagzäher Bodenbeläge sowie im Bereich der technischen Isolierungen (z.B. Kühlmöbel, Rohre).

### Beispiele

### Pendelschlagversuche an Acrylbadewannen

Geprüft wurden die Rückenanlehnflächen von Acrylbadewannen von 180 cm Länge, 50 cm Breite und 80 cm Höhe. Der Rohling war jeweils eine tiefgezogene PMMA-Schale mit 1,2 mm Wandstärke. Auf den Rohling wurden unterschiedliche Verstärkungsschichten aufgebracht. An den erhaltenen Wannen wurden zur Ermittlung der Bruchbeständigkeit Pendelschlagversuche durchgeführt.

Das für die Versuche eingesetzte Pendel bestand aus einem 96 cm langen Metallstab, der so aufgehängt war, dass sich eine Pendellänge von 56 cm ergab. Am Ende des Pendels befand sich ein halbkugelförmiger Hammer mit einem Durchmesser von 55 mm mit einer senkrecht zur Pendelachse in der Schwingungsebene angebrachten Welle zur Aufnahme von Zusatzgewichten, am anderen Ende des Metallstabs ein Ausgleichsgewicht, so dass der Metallstab ausbalanciert war. Die Aufhängung befand sich in 76 cm Höhe über dem Boden.

Zur Durchführung des Pendelschlagversuchs wurde die Wanne an einem Gestell unter der Pendelaufhängung fixiert. Das Pendel wurde in horizontaler Stellung arretiert, mit dem gewünschten Zusatzgewicht beschwert und die Arretierung dann gelöst. Nach dem Versuch wurde die Wirkung des Aufpralls vermessen und der Versuch gegebenenfalls mit einem höheren Zusatzgewicht wiederholt.

### A. GFK-Verstärkung (Vergleich)

Der Grundkörper wurde durch Aufsprühen einer 3 mm dicken Verstärkungsschicht aus glasfaserverstärktem Polyester-Komposit auf die der Sichtfläche abgewandte Seite des Rohlings verstärkt.

| **Stoß Nr.** | **Pendelmasse [kg]** | **Schädigung** |
|---|---|---|
| 1 | 1,9 | - |
| 2 | 2,4 | - |
| 3 | 2,9 | - |
| 4 | 3,4 | - |
| 5 | 3,9 | - |
| 6 | 4,4 | - |
| 7 | 4,9 | - |
| 8 | 5,4 | - |
| 9 | 5,9 | - |
| 10 | 6,4 | 1. Oberflächeneindruck im Acryl |
| 11 | 6,9 | Keine weitere Schädigung |
| 12 | 7,5 | Durchriss vertikal 40 mm |
| 13 | 7,5 | Kreisförmiger Riss, D = 35 mm |
| 14 | 7,5 | 2. kreisförmiger Riss, D = 60 mm |
| 15 | 7,5 | Eindruck von 50 mm Tiefe |

### B. PUR-Verstärkung (Vergleich)

Der Grundkörper wurde durch Aufsprühen einer 3 mm dicken Verstärkungsschicht aus massivem duroplastischen Polyurethan (Baytec® RS massiv, Bayer AG) auf die der Sichtfläche abgewandte Seite des Rohlings verstärkt.

| **Stoß Nr.** | **Pendelmasse [kg]** | **Schädigung** |
|---|---|---|
| 1 | 1,9 | - |
| 2 | 2,4 | - |
| 3 | 2,9 | Hörbare Schädigung |
| 4 | 3,4 | Keine weitere Schädigung |
| 5 | 3,9 | Vertikaler Riss 150 mm |
| 6 | 5,9 | Vertikaler Riss auf 240 mm, horizontaler Riss 180 mm |
| 7 | 5,9 | Vertikaler Riss auf 270 mm, horizontaler Riss auf 210 mm |
| 8 | 5,9 | Vertikaler Riss auf 310 mm, horizontaler Riss auf 210 mm |
| 9 | 5,9 | Vertikaler Riss auf 350 mm, horizontaler Riss auf 250 mm, erste Ausstanzung und Durchriss |

### C. Erfindungsgemäße Verbundstruktur

Der Grundkörper wurde durch Aufsprühen einer 3 mm dicken Verstärkungsschicht aus massivem duroplastischem Polyurethan (Baytec® RS massiv, Bayer AG), gefolgt von einer 1 mm dicken Polyurethan-Elastomerschicht (Baytec® Reaktiv, Bayer AG), einer 13 mm dicken Schicht aus Polyurethanschaum (Baytec® RS Schaum, Bayer AG) und einer weiteren, 2 mm dicken massiven duroplastischen Polyurethanschicht (Baytec® RS massiv, Bayer AG) auf die der Sichtfläche abgewandte Seite des Rohlings verstärkt.

| **Stoß Nr.** | **Pendelmasse [kg]** | **Schädigung** |
|---|---|---|
| 1 | 1,9 | - |
| 2 | 2,4 | - |
| 3 | 2,9 | - |
| 4 | 3,4 | - |
| 5 | 3,9 | 1. Oberflächeneindruck im Acryl, D = 6 mm. |
| 6 | 4,4 | Keine weitere Schädigung |
| 7 | 4,9 | Keine weitere Schädigung |
| 8 | 5,4 | Keine weitere Schädigung |
| 9 | 5,9 | Keine weitere Schädigung |
| 10 | 6,4 | Keine weitere Schädigung |
| 11 | 6,9 | Keine weitere Schädigung |
| 12 | 7,5 | Keine weitere Schädigung |
| 13 | 8,0 | Keine weitere Schädigung |
| 14 | 8,5 | Vertikale Markierung im Eindruck |
| 15 | 9,0 | Keine weitere Schädigung |
| 16 | 9,5 | Keine weitere Schädigung |
| 17 | 10,0 | Keine weitere Schädigung |
| 18 | 10,8 | Riss vom Auftreffpunkt halbkreisförmig, D = 180 mm |

## Patentansprüche

1. Sandwich-Strukturelement, das die folgende Schichtenabfolge aufweist:
a) gegebenenfalls eine dekorative harte Oberflächenschicht,
b) eine massive, duroplastische Polyurethanschicht,
c) eine Polyurethan-Elastomerschicht,
d) gegebenenfalls eine Polyurethanschaumschicht,
e) eine weitere massive, duroplastische Polyurethanschicht,
f) gegebenenfalls ein Substrat oder eine weitere dekorative harte Oberflächenschicht.

2. Sandwich-Strukturelement gemäß Anspruch 1, bei dem alle Polyurethanschichten unter Verwendung derselben Isocyanatkomponente hergestellt sind.

3. Verfahren zur Herstellung des Sandwich-Strukturelements gemäß Anspruch 1 oder 2, bei dem der Auftrag der Polyurethanschichten des Sandwich-Strukturelements aufeinanderfolgend auf ein Substrat oder eine dekorative Oberflächenschicht erfolgt.

4. Verfahren gemäß Anspruch 3, bei dem jeweils die nächste Schicht aufgetragen wird, bevor die darunter liegende Schicht Klebefreiheit erreicht hat.

5. Verfahren gemäß Anspruch 3 oder 4, bei dem der Auftrag der Schichten mittels eines oder mehrerer Mischaggregate erfolgt, wobei bei mindestens einem der Mischaggregate die zuzuführenden Komponenten der Reaktivmischung während des Auftrags derart veränderbar sind, dass aus diesem Mischkopf alternierend duroplastisches Massiv-Polyurethan und Polyurethanschaum erzeugt werden können.

6. Verfahren gemäß Anspruch 3 oder 4, bei dem der Auftrag der Schichten mittels eines oder mehrerer Mischaggregate erfolgt, wobei bei mindestens einem der Mischaggregate die zuzuführenden Komponenten der Reaktivmischung während des Auftrags derart veränderbar sind, dass aus diesem Mischkopf alternierend duroplastisches Massiv-Polyurethan und Polyurethan-Elastomer erzeugt werden können.

7. Verfahren gemäß Anspruch 3 oder 4, bei dem der Auftrag der Schichten mittels eines oder mehrerer Mischaggregate erfolgt, wobei bei mindestens einem der Mischaggregate die zuzuführenden Komponenten der Reaktivmischung während des Auftrags derart veränderbar sind, dass aus diesem Mischkopf alternierend Polyurethan-Elastomer und Polyurethanschaum erzeugt werden können.

8. Verfahren gemäß Anspruch 3 oder 4, bei dem der Auftrag der Schichten mittels eines oder mehrerer Mischaggregate erfolgt, wobei bei mindestens einem der Mischaggregate die zuzuführenden Komponenten der Reaktivmischung während des Auftrags derart veränderbar sind, dass aus diesem Mischkopf alternierend duroplastisches Massiv-Polyurethan, Polyurethanschaum und Polyurethan-Elastomer erzeugt werden können.

9. Verfahren gemäß einem der Ansprüche 3 bis 8, bei dem jede Polyurethan-schicht aus mehreren Lagen durch Sprühauftrag erzeugt wird.

10. Verbundstruktur, enthaltend mindestens ein Sandwich-Strukturelement gemäß Anspruch 1 oder 2.

11. Sanitärartikel, enthaltend mindestens ein Sandwich-Strukturelement gemäß Anspruch 1 oder 2.

12. Aufbau für ein Kühlfahrzeug, enthaltend mindestens ein Sandwich-Strukturelement gemäß Anspruch 1 oder 2.
